# EUROPEAN PATENT SPECIFICATION

(11) **EP 3 015 750 B1**
(45) Date of publication and mention of the grant of the patent: **23.10.2019**
(21) Application number: 15192448.7
(22) Date of filing: 30.10.2015
(51) Int. Cl.: F16K 7/07, B02C 18/00, B02C 18/22, B02C 19/00, B09B 3/00

(54) **DEVICE, METHOD AND SYSTEM FOR SHREDDING AND DISPOSING OF WASTE**
VORRICHTUNG, VERFAHREN UND SYSTEM ZUM ZERKLEINERN UND ENTSORGEN VON ABFALL
DISPOSITIF, PROCÉDÉ ET SYSTÈME POUR BROYER ET ÉLIMINER DES DÉCHETS

(30) Priority: 31.10.2014 NL 2013726; 02.12.2014 NL 2013906
(43) Date of publication of application: 04.05.2016
(73) Proprietor: Pharmafilter B.V., 1015 AE Amsterdam (NL)
(72) Inventor: Van den Berg, Eduardo Alexander, 1015 LH Amsterdam (NL)
(74) Representative: Hylarides, Paul Jacques

(56) References cited:
- EP-A1- 0 662 346
- WO-A1-99/43365
- WO-A1-2004/071667

## Description

The invention relates to a shredding device, method and system for shredding and disposing of domestic, medical and/or industrial waste comprising different liquid and/or solid materials to the sewage system.

Such shredding devices are known, for instance from the earlier European patent application EP 2 188 069 A1. Described in this publication is a cleaning system for processing hospital waste. Use is made in the system of a number of shredding devices suitable for shredding the hospital waste, for instance consisting of faeces and urine in a container such as a chamber pot, and making the waste ready for further processing.

A drawback of the known shredding device is that it has been found difficult to flush away and discharge the shredded waste into a pipe system without problems occurring in the shredding device and/or the pipe system, such as a reduced discharge caused by clogging of the pipes or a complete blockage of the pipe. A further drawback of the known shredding device is that, because of the presence of relatively large shredded waste parts in the discharge flow, determined components such as closing devices and the like function less well, for instance because they cannot be fully closed because of pieces of waste which prevent closing of the closing device and/or because excessive wear is caused as a result of the presence of the pieces of waste.

The European patent publication EP 0 662 346 A1 describes equipment for sanitizing medical waste. The inserted waste is first shredded by a shredder and enters a mixing chamber. Sanitizing liquids are then supplied to the shredded waste in the mixing chamber which attempt to sanitize the waste. Liquid is then drained from the mixture in the mixing chamber and the remaining waste is discharged in active manner via a conveyor (for instance a belt conveyor). The mixing chamber is in open connection with the sewer, and a closing device is not present. In order to prevent the waste flowing immediately from the mixing chamber to the sewer the waste is first displaced in upward direction from the mixing chamber via a first discharge part, and only then is the waste discharged in the direction of the sewer via a further downward directed discharge part connected to the first discharge part.

This known equipment has the drawback, in addition to some of the above stated drawbacks, that due to the presence of the conveyor the construction is complex. In addition, there is a permanent open connection to the sewer, which is not always desirable from the viewpoint of odour nuisance and hygiene. It is an object of the invention to obtain a device, system and method of the type stated in the preamble in which at least some of the above stated drawbacks are obviated. It is also an object of the invention to provide a device, system and method in which there is a relatively small risk of blockages.

According to a first aspect of the invention, at least one of the objectives can be at least partially achieved in a shredding device which is configured to shred and discharge to the sewer domestic, medical and/or industrial waste comprising different liquid and/or solid materials, wherein the solid materials comprise plastic parts and/or metal parts for shredding, the shredding device comprising:
- an inlet for inserting the waste to be shredded and discharged;
- a shredding unit embodied to shred waste inserted via the inlet;
- a receiving space embodied to receive the shredded liquid and solid material waste;
- a transport liquid feed embodied to feed transport liquid to the receiving space;
- an outlet connectable to the receiving space and the sewer, wherein the outlet is configured to discharge the mixture of the shredded liquid and solid material waste as well as the transport liquid from the receiving space to the sewer;
wherein the outlet comprises an adjustable closing device for adjusting the throughflow of said mixture from the receiving space to the sewer, wherein the adjustable closing device comprises:
- a closing device housing provided with an entrance and an exit;
- a flexible element, in particular a flexible membrane, arranged in the closing device housing and connected to the entrance and exit, wherein the flexible element is embodied to form an adjustable passage between the entrance and exit;
- a controller unit for displacing the flexible element between a closing position, in which the membrane closes the passage between the entrance and exit, and an opened position in which the flexible element leaves a passage clear between the entrance and exit.

The mixture of shredded liquid and solid material waste and transport liquid preferably flows under the influence of gravitational force directly from the receiving space to the sewer without additional provisions such as a conveyor being necessary here. The shredding device is further provided with a closing device to enable closing of the passage to the sewer so that no open connection to the sewer will occur.

In a further embodiment the bottom of the receiving space extends at an incline. This measure enhances the flow of the mixture of shredded liquid and solid material waste and transport liquid from the receiving space to the sewer (at least when the closing device is opened).

By making use of a closing device with such a flexible element the passage to the sewer can be better closed, even when waste residues are still present in the closing device. This means that the risk of transport liquid seeping away is reduced, so that potentially more transport liquid is available to flush away the waste. This reduces the risk of blockages in the outlet of the shredding device. A typical example of a suitable closing device is a pinch valve, in particular a membrane valve or bellows valve.

According to an embodiment of the invention, the controller unit comprises a pressure medium unit configured to supply pressure medium to the intermediate space between the flexible element and the closing device housing in order to close the closing device and to discharge pressure medium from said intermediate space in order to open the closing device. The pressure medium can be any random fluid (liquid and/or gas), but the pressure medium is preferably a liquid. The medium can for instance consist of water. Using the described construction sufficient pressure can be built up quickly and efficiently in order to close and hold the closing device closed, even if waste residues are present in the passage.

The flexible element is preferably manufactured from rubber. A rubber sleeve in particular can be arranged in the closing device housing, wherein the outer ends of the sleeve are attached to respectively the entrance and exit of the closing device housing.

In order to reduce the risk of leakage caused by the presence of waste material in the closing device the flexible element preferably has an elongate form, so defining an elongate passage. The length of this form is preferably greater than the largest dimension of a piece of shredded waste. This means that in closed state of the closing device a piece of waste can never protrude on both sides of the flexible element, and a part of the flexible element is therefore always available to close the passage to sufficient extent. The largest dimensions of a piece of shredded waste can vary depending on a number of factors, such as the dimensions and form of the shredding element. In typical situations the flexible element is embodied such that the length of the passage is greater than 5 cm, preferably greater than 10 cm.

In a further embodiment of the invention the transport liquid feed and the receiving space are embodied and arranged in order to set and hold the supplied transport liquid in swirling motion in the receiving space. This ensures that the waste material remains as far as possible in suspension and does not deposit on the bottom of the receiving space, or does so to lesser extent. This reduces the risk of blockages in the shredding device and the downstream outlet conduits. The transport liquid is preferably supplied under high pressure, for instance 2 bar or more, in order to set the mixture sufficiently into swirling motion. With a similar purpose the bottom of the receiving space preferably takes a curved form, this such as to enhance the creation of swirling in the transport liquid.

In a further embodiment the transport liquid feed comprises one or more spray nozzles for forming one or more liquid jets in the direction of the bottom of the receiving space. The spray nozzles are preferably disposed so as to generate liquid jets in downward direction. The transport liquid feed can further comprise a spray nozzle which is embodied and arranged to introduce transport liquid in substantially horizontal direction into the receiving space and/or to urge transport liquid and waste suspended therein in the direction of the outlet. This spray nozzle is often only switched on at the moment that the closing device is opened and the waste mixture has to be discharged from the shredding device, and provides for an efficient and rapid discharge of the waste with relatively little chance of blockages.

In further embodiments the shredding device comprises:
- a shredding element driven rotatably via a drive motor and having an outer surface provided with protrusions;
- a swing element configured to press a part of the waste against the outer surface of the shredding element during shredding, wherein the swing element is embodied for swinging between a first pressing position and a second pressing position.

The swing element is preferably mounted rotatably on the (stationary) housing of the shredding device. By swinging the swing element the waste which may have come to lie on top of the member can be displaced to the shredding element so that shredding of this part of the waste can still take place. The swing element can further press the waste against the shredding element in different positions and at different locations relative to the position of the shredding element. The rotation shaft of the swing element is preferably located at an offset position relative to the (imaginary) perpendicular line through the rotation shaft of the shredding element. The swing element can hereby press the waste against the outer surface of the shredding element in different ways, for instance at different angles and/or at different positions.

In a determined embodiment the swing element extends in the first pressing mode at a first position relative to the shredding element, and extends in the second pressing mode at a second position relative to the shredding element. By pressing from different positions the swing element can shred the waste in different ways, this enhancing the result of the shredding.

According to a further embodiment, the shredding device comprises a control unit configured to control at least one of the shredding element, the transport liquid feed and the adjustable closing device. The control unit can be embodied here to transport the waste intermittently to the outlet. With intermittent transport of the mixture to the outlet the quantity of mixture transported each time is greater than if there were a continuous transport of the mixture. This reduces the chance of blockage in the outlet.

Provided according to another aspect of the invention is a system for shredding and transporting waste in a building, in particular a care institution, aircraft or airport terminal, the system comprising:
- one or more shredding devices of the type defined herein disposed at different locations in the building;
- a pipe system connected to the respective outlet(s) of said one or more shredding devices, wherein the pipe system is connected to the sewer;
the system further comprising:
- one or more separating devices arranged in the pipe system and configured to separate the shredded and discharged mixture of liquid and waste into at least a first and second waste part and carrying only the first waste part to the sewer; and/or
- one or more purification devices arranged in the pipe system and configured to purify at least a part of the shredded and discharged waste; and/or
- one or more fermenters arranged in the pipe system and configured to ferment at least a part of the shredded and discharged waste.

Provided according to yet another aspect of the invention is a method for shredding and discharging to the sewer domestic, medical and/or industrial waste comprising liquid and/or solid materials, wherein the solid materials comprise plastic parts and/or metal parts to be shredded, the method comprising of:
- inserting a quantity of waste for shredding into a shredding device of the type described herein;
- shredding the inserted waste with the shredding unit;
- carrying the shredded waste to a receiving space;
- feeding transport liquid to the receiving space;
- opening the passage in the adjustable closing device;
- discharging the mixture of shredded waste and transport liquid to the sewer by opening the passage;
- closing the passage in the adjustable closing device.

The method preferably comprises of intermittently opening and closing the passage for the purpose of transporting at least a minimum volume at a time of the mixture of transport liquid and shredded waste. In another embodiment the method comprises of supplying pressure medium to the intermediate space between the flexible element and the closing device housing for the purpose of closing the closing device and discharging pressure medium from said intermediate space for the purpose of opening the closing device. In yet another embodiment the method comprises of generating swirling of the mixture of waste and transport liquid in the receiving space.

Further advantages, features and details of the present invention will be elucidated on the basis of the description of several embodiments thereof. Reference is made in the description to the figures, wherein:
Figure 1 is a partially cut-away perspective view of an embodiment of a shredding device according to the invention;
Figure 2 is a further cut-away perspective view of the shredding device of figure 1;
Figure 3A is a perspective exploded view of the cut-away view of figure 2;
Figure 3B is a detail view of the shredding unit;
Figure 4 is a detail view of the lower receiving space of the shredding device;
Figures 5A and 5B show respectively a cross-section through an embodiment of a closing device according to the invention with respectively a closed and opened passage;
Figures 6 and 7 show longitudinal sections through the shredding unit with the swing element in respectively a first and second position;
Figure 8 is a schematic view of an embodiment of a system according to the invention; and
Figures 9A, 9B, 9C show respective longitudinal sections through an embodiment of the shredding device with the swing element in a starting position and two intermediate positions.

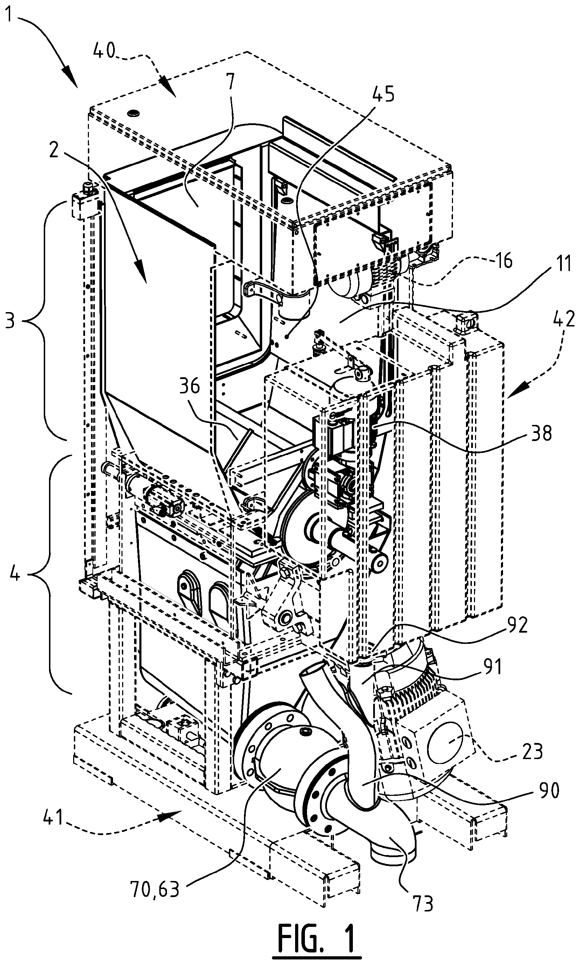

Figures 1-7 show an exemplary embodiment of a shredding device 1 according to the invention. The shredding device can be intended for the purpose of processing domestic, medical and/or industrial waste. This waste can be of differing content. In hospitals and care institutions the waste can for instance consist mainly of faeces and/or urine in containers, for instance plastic and/or metal containers (chamber pots), hospital waste such as bandages, plasters, medication residues, toxic substances and the like, and/or other waste such as food, drink and the like. In other buildings such as an airport, station, restaurant and the like the composition of the waste will usually be different. In such cases the waste will often comprise more plastic or metal parts such as cups, cutlery, packaging material and the like. The shredding device is preferably embodied such that it is suitable for processing any type of waste typically generated in the associated building.

The shredding device comprises a housing 2 placeable on a ground surface. Housing 2 comprises a frame provided all around with sheeting. The different components of the shredding device are fixed to the frame and the sheeting. In the shown embodiment the housing is constructed from an upper housing part 3 and a lower housing part 4. In other embodiments the housing parts and the functional elements provided therein can be arranged in other manner relative to each other, for instance a second housing part adjacently of the first housing part. Upper housing part 3 is particularly configured for receiving waste and subsequently crushing or shredding thereof. Lower housing part 4 is particularly configured for receiving the shredded waste, mixing the shredded waste with a transport liquid and subsequently transporting the mixture of waste and transport liquid at fixed or variable intervals in the direction of the public sewage system.

Upper housing part 3 forms a closed space, here also referred to as upper receiving space 45. Access to receiving space 45 takes place via a feed opening 7 in the side wall of the housing. Feed opening 7 can be closed with a cover 8 (not shown). A displaceable placing platform 11 is provided in the middle of the receiving space. This placing platform divides receiving space 45 into an upper and lower compartment. When an operative wishes to process waste, he/she places the waste on placing platform 11 and then closes feed opening 7. The waste is now situated in the closed upper compartment.

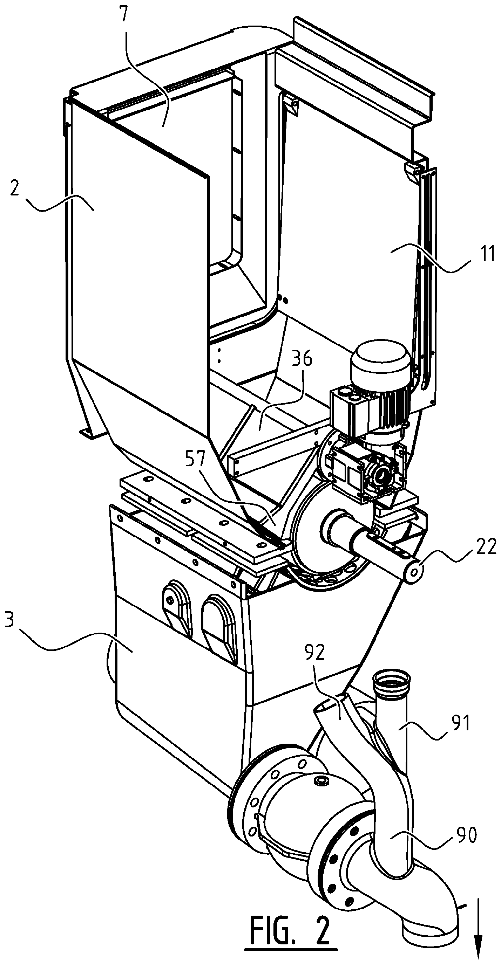

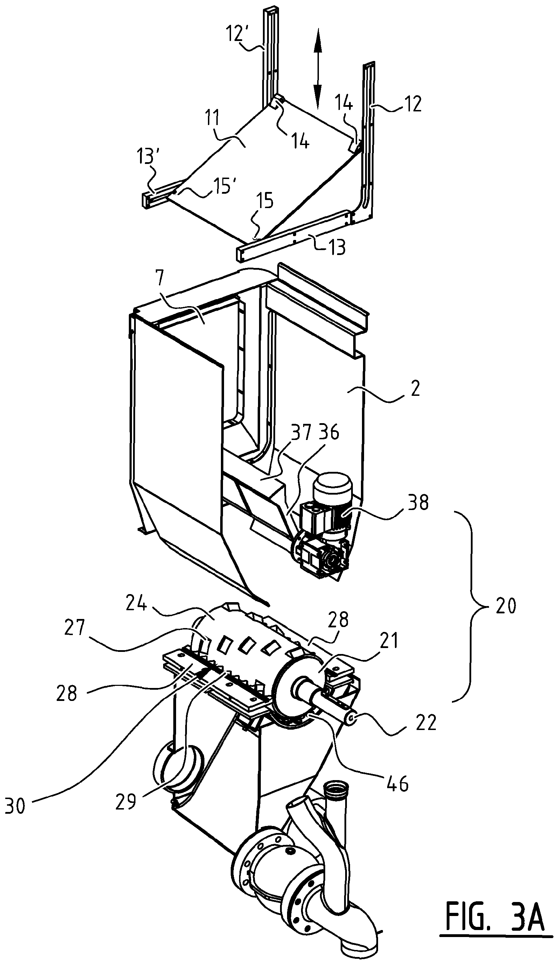

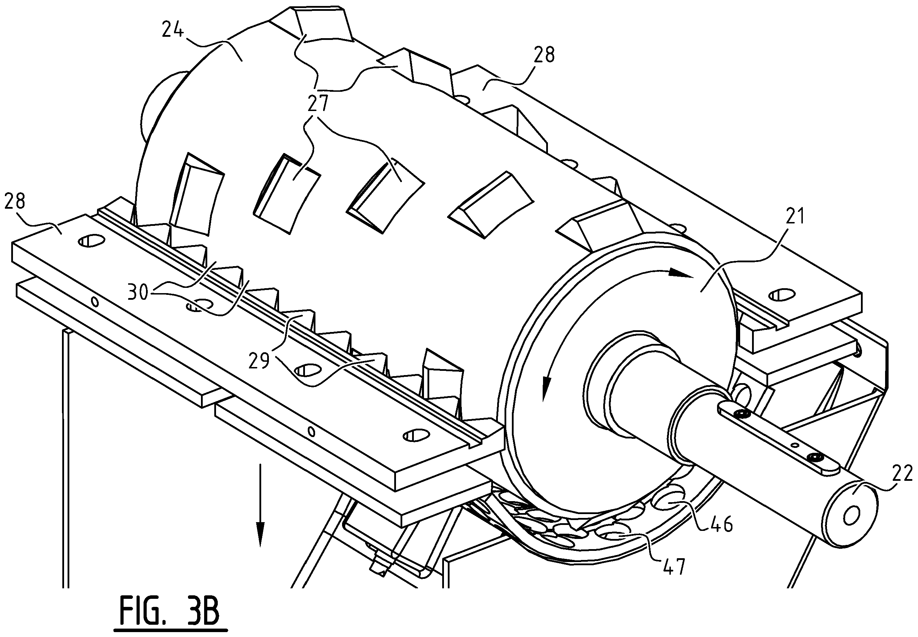

Placing platform 11 can be displaced between a horizontal position, in which the platform divides the receiving space into two compartments, and a vertical position (see figures 1 and 2). During displacement of the placing platform (see figure 3A) the waste which may be arranged thereon can drop downward under the influence of gravitational force and enter the second compartment. More details of the mechanism for displacing placing platform 11 are shown in figures 2, 3 and 9A-9C. The flat placing platform 11 is provided on the sides with laterally protruding pins 14,15. These pins 14,15 are guided in a guide profile, more particularly an upright profile part 12 and a lying profile part 13. The displacement of the placing platform is driven by a drive motor 16 (figure 1). Drive motor 16 is connected to a central control unit 40 with which the different components of shredding device 1 can be controlled.

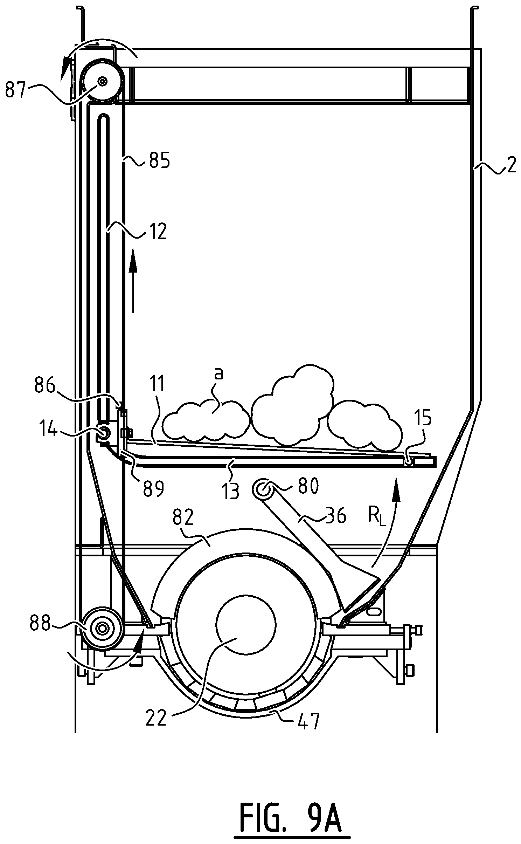

Drive motor 16 can comprise an electric motor which can set one or more rotatable rollers 87 into rotation via a shaft (figures 9A-9C). Arranged over rotatable roller 87 is a cable 85 which is coupled at a first outer end at the position of connection 86 to the upper side of a displaceable support 14 and coupled at a second outer end, at the position of connection 89 and via one or more second rollers 88, to the upper side of the displaceable support. Counter-clockwise rotation of roller 87 (as shown in figure 9A) means that cable 85 provides for lifting of platform 11. Rotation of roller 87 in the opposite direction means that platform 11 is lowered.

A shredding unit 20 is arranged in the second compartment of receiving space 45. The shredding unit is more particularly arranged in the somewhat narrowed lower part of the compartment. Shredding unit 20 comprises a shredding element 21 for shredding the harder parts in the waste, for instance plastic and/or metal parts, into fragments of a determined maximum size. The maximum fragment size is chosen such that the fragments can still be flushed away relatively easily with a transport liquid (e.g. water). The maximum fragment size is typically 80 mm or 50 mm, or even 30 mm.

Shredding element 21 forms a cylinder, on the outer surface of which a pattern of protrusions is arranged. Shredding element 21 is also mounted rotatably on the housing via a drive shaft 22. Drive shaft 22 is coupled via a right-angled transmission (not specifically shown) to an electric drive motor 23. Electric drive motor 23 is connected for communication to central control unit 40. Control unit 40 controls inter alia the rotation direction and rotation speed of the shredding element as well as the timing thereof. In the shown embodiment the shredding element 21 can be rotated in both directions (R₁).

Supports 28 are arranged laterally of shredding element 21. These supports are provided on mutually facing edges with a large number of protrusions 29. Formed between protrusions 29 are intermediate spaces along which the protrusions 27 provided on the shredding element can pass when shredding element 21 is rotated. The combination of protrusions 27,29 provides for a good shredding of the waste. The shredded waste is discharged on the underside via a screen 46.

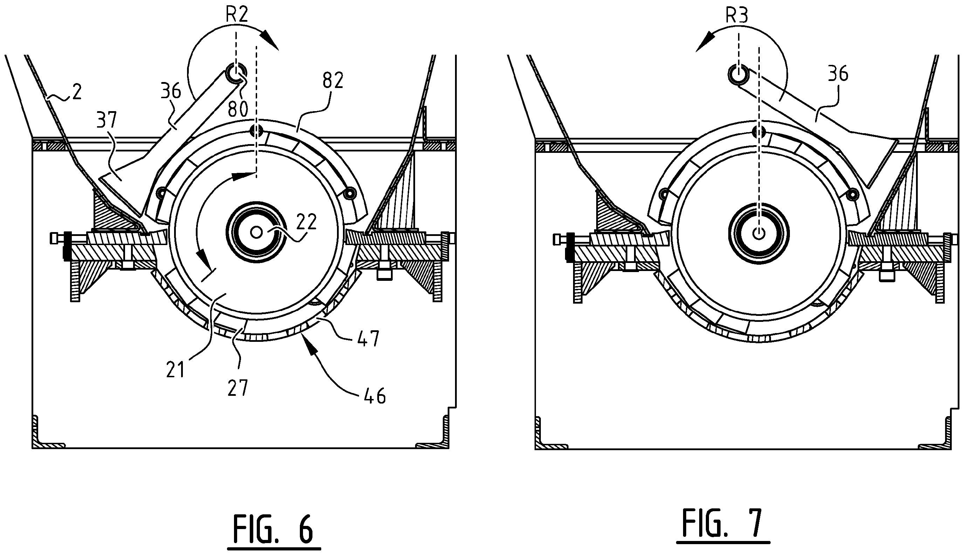

Shredding unit 20 is further provided with a swing element 36. This swing element is mounted rotatably on housing 2 via a shaft 80 (figures 6, 7) and can be swung in two opposite directions R₂, R₃ using a drive motor 38. Shown in figure 6 is a first position in which swing element 36 extends on one side (on the left hand side in the figure) of shredding element 21, while in figure 7 swing element 36 extends on an opposite side of the shredding element. The two positions are determined by the positioning and dimensions of one or more stationary stop members which extend directly above the shredding element. These stop members ensure that the swing element is held a predetermined minimum distance from the outer surface of the shredding element and no direct contact occurs between the swing element and the shredding element. The swing element can also be controlled by control unit 40 such that it can function as pressing element during shredding of the waste, as will be further set forth below.

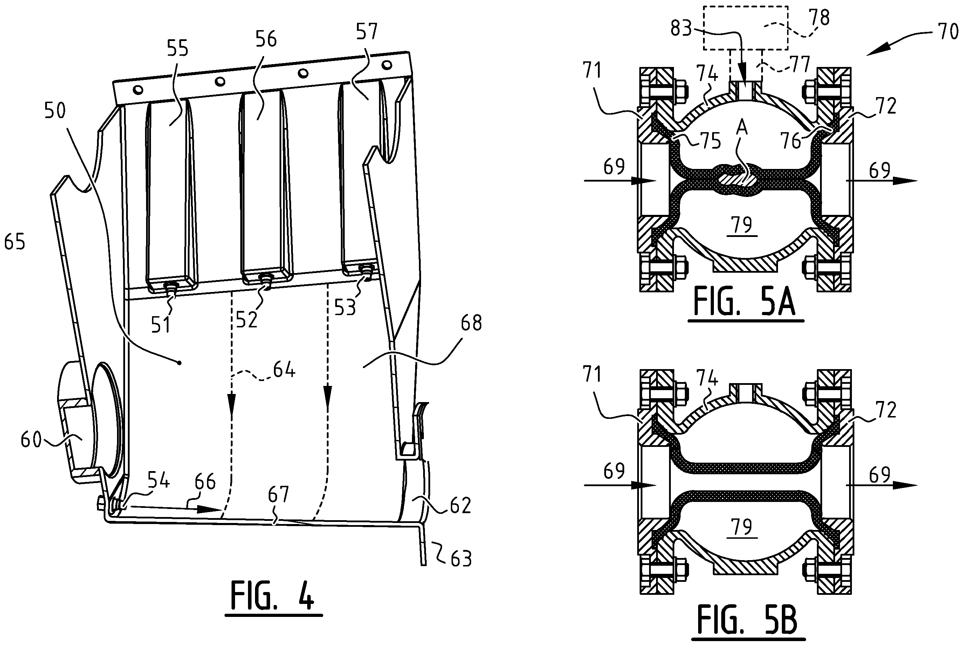

As already stated, a screen 46 fixed to the housing is provided along the underside of shredding element 21. This screen is provided with a number of holes 47 which can allow the shredded waste to pass through in the direction of the lower receiving chamber or receiving space 50 located thereunder (figure 4). The openings are of a size chosen such that only waste fragments can pass through which are small enough to be properly transported by a liquid flow to the sewer at a later stage.

Swing element 36 is provided on the outer end opposite shaft 80 with a widened portion 37, the inner side of which is shaped such that it to some extent follows the rounding of shredding element 21. This means that waste can be pressed better against shredding element 21 locally than if swing element 36 were to have a straight shape.

As stated above, lower receiving space 50 is realized in lower housing part 4. Referring to figure 4, an inspection opening 60 is arranged in rear wall 65 of lower housing part 4. This inspection opening is of course closed during operation of the shredding device, but can of course be opened after use to gain access to the interior of the receiving space, for instance for maintenance and/or cleaning thereof. Receiving space 50 is bounded on another upright side by an inclining wall 61. This wall extends obliquely relative to the vertical direction in order to make the lower receiving space substantially funnel-shaped. On the underside, i.e. at the position of bottom 67, the receiving space takes a curved form. A number of spray nozzles 51-53 are arranged on the inner side of the inclining wall. The spray nozzles are connected via feeds 55-57 to a liquid supply (not shown) and are configured to spray transport liquid (i.e. liquid which has the function of transporting the waste) downward under high pressure along the inner side of the wall (in the directions 64 indicated with broken lines). The downward flowing transport liquid can cause a swirling liquid mass at the curved bottom 67 of receiving space 50. When waste now enters the lower receiving space via the above-mentioned openings 47 in screen 46 between the upper and lower receiving space (i.e. drops downward in the shown embodiment under the influence of gravitational force), spray nozzles 51-53 is ensure that the waste is taken up into the liquid, more particularly that the waste becomes suspended therein. Because the liquid (e.g. water) has a strong swirling motion on the underside of receiving space 50, there is little chance of the waste depositing on the bottom. The waste hereby remains as far as possible in suspension while awaiting further transport to the sewer.

Bottom 67 of receiving space 50 slopes to some extent (i.e. bottom 67 makes an angle α relative to the horizontal as shown in figure 4) so that a mixture of water and waste which may be present in the receiving space tends to move in the direction of outlet opening 62. In addition, a further spray nozzle 54 is arranged in rear wall 65 of lower housing part 4. This spray nozzle can support the transport of said mixture in the direction of the outlet opening. Spray nozzle 45 is configured to carry water with great force in the direction of outlet opening 62 (i.e. the direction 66 indicated with the arrow in figure 4). Spraying with spray nozzles 51-54, and particularly the timing thereof, can be controlled by the above-mentioned central control unit 40.

Outlet opening 62 is the starting point of an outlet 63 along which the mixture of shredded waste can be discharged to the sewer. Provided in outlet 63 is a closing device 70 which is configured to allow selective passage of the mixture. The closing device can as required open or close the passage 69 for the mixture of water and waste in the direction of an outlet conduit 73 connected to the sewer.

Closing device 70 comprises a first connecting flange 71 with which closing device 70 is connected to outlet 63. Using a second connecting flange 72 opposite first connecting flange 71 the closing device can be fixed to an outlet conduit 73 of outlet 63. Closing device 70 further comprises a spherical closing device housing 74 (preferably manufactured from steel, although other materials can likewise be applied) with said connecting flanges 71,72 on either side. In the spherical closing device housing 74 is arranged a flexible element 75, for instance a flexible membrane (also referred to herein as a flexible sleeve because of the elongate form thereof in the case of the specific embodiment of figures 5A,5B).

Flexible element 75 can be manufactured from different materials, but the flexible element is preferably manufactured from rubber. The outer ends of the flexible element are arranged on the respective connecting flanges 71, 72, this such that an intermediate space 79 is formed between the inner side of closing device housing 74 and the outer side of flexible element 75. This intermediate space can be filled with a pressure medium, for instance water or other liquid, so as to build up a desired pressure in intermediate space 79. The pressure medium can be supplied or discharged by a pressure medium unit 77 via an opening 83 in closing device housing 74. Pressure medium unit 77 can for instance comprise a compressor with which medium can be guided under pressure from a pressure medium reservoir 78 via a conduit to opening 83. Other embodiments of a pressure medium unit can of course also be envisaged and are all within the reach of the skilled person.

As more and more pressure medium is introduced into intermediate space 79, flexible element 75 will expand still further so that at a given moment the passage 69 through closing device 70 is obstructed. Figure 5A shows a closed position of flexible element 75 in which flexible element 75 is fully expanded and thereby completely closes the passage through closing device 70. Figure 5B shows on the other hand the opened position in which sufficient pressure medium has been removed from intermediate space 79 that passage 69 is clear. A clear passage means that the mixture of transport liquid and waste from receiving space 50 can pass through closing device 70 and can be discharged via outlet conduit 73.

Because element 75 is highly flexible, the passage 69 through the closing device can also be fully closed when waste is still located at the position of closing device 70, even if this waste includes relatively large pieces. Shown for instance in figure 5A is that a piece of waste (A) is located between the parts of flexible element 75. In other types of closing device, for instance in the case of flap valves or slide valves, the presence of larger pieces of waste would mean that the passage could not be closed completely. This is undesirable because, when the passage is not sufficiently closed, transport liquid can seep away and insufficient transport liquid is sometimes left in receiving space 50 to flush the waste away with sufficient force. This can result in obstruction and blockages. In the shown embodiment of the closing device however, the passage can nevertheless be completely closed as a result of the flexibility of the material of the sleeve and despite the presence of waste residues (A).

As set forth above, closing device 70 is connected to an outlet conduit 73. In determined embodiments this outlet conduit can be connected directly to the sewer. In the other embodiments however, outlet conduit 73 is connected to one or more purification or cleaning installations in order to purify the waste in the mixture and/or bring about a further separation. The outlet conduit can also be connected to a fermenter in order to subject parts of the waste to a fermentation process. Only after separation, cleaning and/or fermentation of the waste does at least a part thereof enter the sewage system and is thereby discharged.

As shown in figure 1, a pipe 90 is connected to the upper side of outlet conduit 73. This pipe 90 is in turn connected to a flushing water supply tube 91 provided with a water reservoir 42 (figure 1). This flushing water supply with water reservoir functions as discharge container for an additional flushing of outlet conduit 73. A valve 92 can be provided between water reservoir 42 and flushing water supply tube 91. This valve is controllable via control unit 40 and can be opened and closed as required. When for instance a quantity of waste mixture is guided in the direction of outlet conduit 73 via opening of closing device 70, the valve of water reservoir 42 can also be opened in order to pour an additional quantity of flushing water in the direction of outlet conduit 73, thus enhancing transport of the waste flow and reducing the chance of possible blockages in the outlet conduit.

During use an operative places a quantity of waste (for instance a container with faeces, a quantity of medical waste, a urine drain etc.) in upper receiving space 45 by placing this waste (a) via feed opening 7 onto placing platform 11. This situation is shown in figure 9A. The operative then closes feed opening 7 with the cover. Closing of the cover is detected by control unit 40 which then sets the drive 16 of placing platform 11 into operation.

This has the result that placing platform 11 is tilted until it is situated in a vertical position. During the tilting the waste drops downward in the direction of shredding element 21. Shredding element 21 has meanwhile been set into operation through activation by the control unit. When swing element 36 is in the position shown in figure 6, the waste will partially fall on top of swing element 36 on the left-hand side and partially fall directly onto shredding element 21 on the opposite side. By rotating the shredding element 21 in one or both rotation directions the part of the waste which has come to lie on the right-hand side of element 21 can be directly shredded and discharged via screen 46. After a determined period of time the drive of swing element 36 will displace this swing element to the opposite position, for instance by rotation in direction R₂ from the first position shown in figure 6 to the second position shown in figure 7. The waste which may have come to lie on swing element 36 can now be pressed by the swing element onto shredding element 21. Swing element 36 functions here as a way of pressing the waste, whereby an improved shredding can be realized. The rotation direction of shredding element 21 can remain the same here, but can also be reversed one or more times. The swing element can optionally be swung back again (direction R₃) and the process of swinging the swing element between the two said positions and driving the shredding element can be repeated a number of times until the waste in the receiving space has been sufficiently shredded and is discharged via screen 46 in the direction of lower receiving compartment 50.

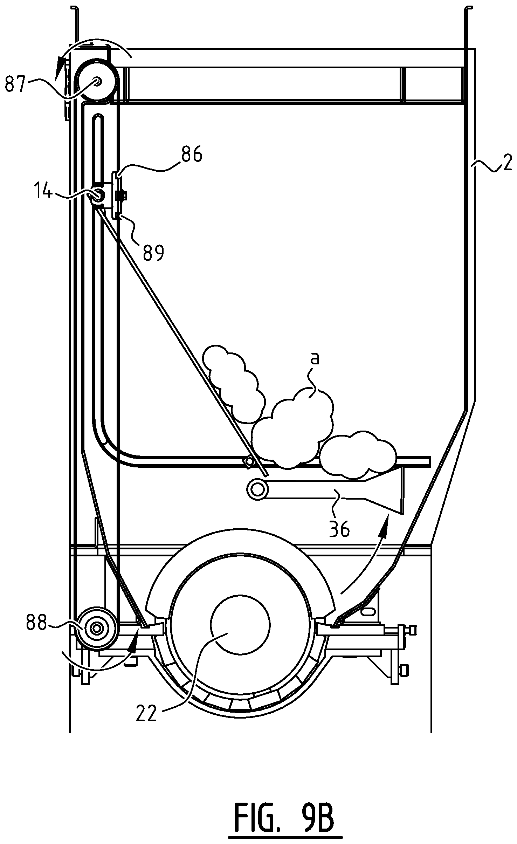

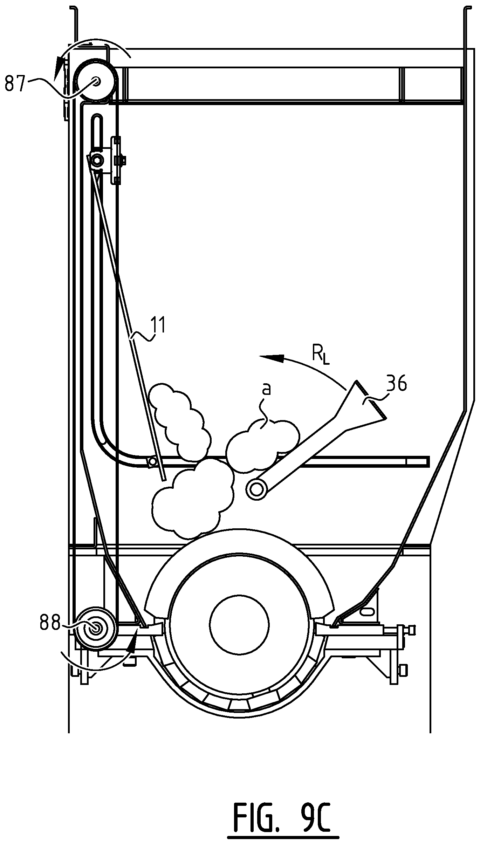

In determined embodiments the placing platform 11 can otherwise be driven at a speed and with a timing such that the waste drops downward in more dosed manner. When the placing platform is for instance tilted upward relatively slowly from the horizontal position (as shown in figure 9A), in an intermediate position (as shown in figure 9B) the first part of the waste can already drop downward and be shredded by the shredding unit while the remaining part of the waste temporarily remains lying on the placing platform. The waste (a) can for instance be dropped downward in dosed manner by rotating swing element 36 slowly upward (direction R_{L}) to the position shown in figure 9C, in which all the waste slides downward, and even to the position shown in figure 6. Depending on, among other factors, the size of the pieces of waste and the composition thereof, it may be advisable to rotate swing element 36 back again so that the waste (a) which may be temporarily present on the upper side of the swing element is displaced to the opposite side of the shredding element and there further shredded. The placing platform can in the meantime be tilted so much further that the end position as shown in figure 2 is reached.

Waste which has entered lower receiving compartment 50 is now sprayed using the spray nozzles, this such that a mixture of water and waste forms close to the bottom 67 of lower receiving compartment 50. Owing to the curved form of bottom 67 of receiving compartment 50 and under the influence of the jets of water from spray nozzles 51-53 this mixture will be in swirling motion, so avoiding as far as possible that the shredded waste begins to deposit onto bottom 67.

Owing to the slope in bottom 67 the mixture will tend to displace in the direction of outlet 63. This outlet is however closed by closing device 70. When at a given moment a sufficient quantity of mixture of waste and transport liquid has accumulated in lower receiving space 50, central control unit 40 will operate pressure medium unit 77 so as to open the valve of closing device 70. This opening takes place by discharging pressure medium from the intermediate space 79. The passage is hereby cleared and said mixture can be guided in the direction of outlet conduit 73. As a result of the slope the mixture will normally flow automatically in the direction of outlet conduit 73.

However, in order to accelerate this discharge and to reduce the risk of waste residues nevertheless accumulating on the bottom, whereby possible blockage could occur, spray nozzle 54 is also switched on when closing device 70 is opened. This spray nozzle generates a jet of water which urges the mixture further in the direction of outlet 63. The mixture is discharged via passage 69 in closing device 70 and enters outlet conduit 73. In order to reduce the risk of blockages in this outlet conduit 73 a quantity of water can be supplied from water reservoir 42 (although this is optional) in order to obtain an additional flushing action. Once the mixture of waste and water has been discharged, closing device 70 is closed again and the cycle can be repeated.

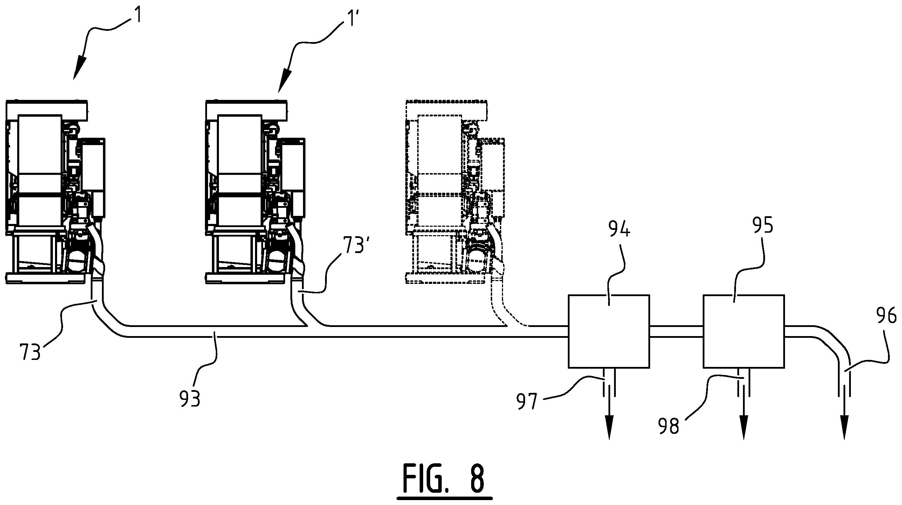

Figure 8 shows an embodiment of a system for shredding and discharging waste. The system comprises a number of shredding devices of the type as described herein. The shredding devices will normally be disposed at different positions and/or in different spaces in a building. It is however also possible to place two or more of the shredding devices in a single space. Outlet conduits 73,73' of the different shredding devices 1,1' can be connected to a common conduit 93. The common conduit 73 can be connected to a separating device 94 and a purification device 95 so that the part of the waste which eventually enters the sewer 96 will first have undergone a separating and purification treatment. The part separated in separating device 94 is discharged via a conduit 97 for further processing. Of the part of the waste separated and guided to purification device 95 one part will eventually be purified and discharged to sewer 96 and another part can be discharged via outlet 98 for further treatment.

## Claims

1. Shredding device (1) which is configured to shred and discharge to the sewer domestic, medical and/or industrial waste comprising liquid and/or solid materials, wherein the solid materials comprise plastic parts and/or metal parts for shredding, the shredding device comprising:
- an inlet (7) for inserting the waste to be shredded and discharged;
- a shredding unit (20) embodied to shred waste inserted via the inlet;
- a receiving space (45) embodied to receive the shredded liquid and solid material waste;
- a transport liquid feed embodied to feed transport liquid to the receiving space;
- an outlet (62) connectable to the receiving space and the sewer;
wherein the outlet is configured to discharge the mixture of the shredded liquid and solid material waste as well as the transport liquid from the receiving space to the sewer; and that the outlet comprises an adjustable closing device for adjusting the throughflow of said mixture from the receiving space to the sewer, **characterized in that** the adjustable closing device (70) comprises:
- a closing device housing (74) provided with an entrance and an exit;
- a flexible element (75), in particular a flexible membrane, arranged in the closing device housing and connected to the entrance and exit, wherein the flexible element is embodied to form an adjustable passage between the entrance and exit;
- a controller unit (40) for displacing the flexible element between a closing position, in which the membrane closes the passage between the entrance and exit, and an opened position in which the flexible element leaves a passage clear between the entrance and exit.

2. Shredding device as claimed in claim 1, wherein the bottom of the receiving space extends at an incline for the purpose of displacing the liquid and solid materials in the direction of the outlet in the opened position of the closing device.

3. Shredding device as claimed in claim 1 or 2, wherein the controller unit comprises:
- a pressure medium unit configured to supply pressure medium to the intermediate space between the flexible element and the closing device housing in order to close the closing device and to discharge pressure medium from said intermediate space in order to open the closing device.

4. Shredding device as claimed in claim 1, 2 or 3, wherein the flexible element of the adjustable closing device comprises a rubber sleeve connected to the entrance and exit and/or wherein the adjustable closing device is a pinch valve.

5. Shredding device as claimed in any of the foregoing claims, wherein the flexible element has an elongate form for defining an elongate passage, wherein the length of the flexible element and the passage realized thereby is greater than the largest dimension of a piece of shredded waste and/or wherein the length of the passage is greater than 5 cm, preferably greater than 10 cm.

6. Shredding device as claimed in any of the foregoing claims, wherein the transport liquid feed and the receiving space are embodied and arranged in order to set and hold the supplied transport liquid in swirling motion in the receiving space, wherein the bottom of the receiving space preferably takes a curved form in order to enhance swirling in the transport liquid.

7. Shredding device as claimed in any of the foregoing claims, wherein the transport liquid feed comprises one or more spray nozzles for forming one or more liquid jets in the direction of the bottom of the receiving space, and/or wherein the transport liquid feed comprises a spray nozzle which is embodied and arranged to introduce transport liquid in substantially horizontal direction into the receiving space and/or to urge transport liquid and waste suspended therein in the direction of the outlet.

8. Shredding device as claimed in any of the foregoing claims,
wherein the shredding device comprises a shredding element (21) driven rotatably via a drive motor and having an outer surface provided with protrusions, and a swing element (36) configured to press a part of the waste against the outer surface of the shredding element during shredding, wherein the swing element is embodied for swinging between a first pressing position for pressing a part of the waste against the outer surface of the shredding element and a second pressing position for pressing another part of the waste against the outer surface of the shredding element.

9. Shredding device as claimed in claim 8, wherein the swing element extends in the first pressing mode at a first position relative to the shredding element, and extends in the second pressing mode at a second position relative to the shredding element.

10. Shredding device as claimed in claim 8 or 9, comprising a stationary stop member attached to the housing for holding the swing element a predetermined distance from the outer surface of the shredding element in the first and second pressing position.

11. Shredding device as claimed in any of the foregoing claims, comprising a control unit configured to control at least one of the shredding element, the transport liquid feed and the adjustable closing device, wherein the control unit is preferably embodied to transport the waste intermittently to the outlet.

12. System for shredding and transporting waste in a building, in particular a care institution, aircraft or airport terminal, the system comprising:
- one or more shredding devices (1) for shredding and transporting waste as claimed in any of the foregoing claims disposed at different locations in the building;
- a pipe system connected to the respective outlet(s) of said one or more shredding devices, wherein the pipe system is connected to the sewer;
the system further comprising:
- one or more separating devices arranged in the pipe system and configured to separate the shredded and discharged mixture of liquid and waste into at least a first and second waste part and carrying only the first waste part to the sewer; and/or
- one or more purification devices arranged in the pipe system and configured to purify at least a part of the shredded and discharged waste; and/or
- one or more fermenters arranged in the pipe system and configured to ferment at least a part of the shredded and discharged waste.

13. Method for shredding and discharging to the sewer domestic, medical and/or industrial waste comprising different liquid and/or solid materials, wherein the solid materials comprise plastic parts and/or metal parts to be shredded, the method comprising of:
- inserting a quantity of waste for shredding into a shredding device as claimed in any of the claims 1-12;
- shredding the inserted waste with the shredding unit;
- carrying the shredded waste to a receiving space;
- feeding transport liquid to the receiving space;
- opening the passage in the adjustable closing device;
- discharging the mixture of shredded waste and transport liquid to the sewer by opening the passage;
- closing the passage in the adjustable closing device,
preferably comprising of supplying pressure medium to the intermediate space between the flexible element and the closing device housing for the purpose of closing the closing device and discharging pressure medium from said intermediate space for the purpose of opening the closing device.

14. Method as claimed in claim 13, comprising of intermittently opening and closing the passage for the purpose of transporting at least a minimum volume at a time of the mixture of transport liquid and shredded waste.

15. Method as claimed in either of the claims 13-14, comprising of generating swirling of the mixture of waste and transport liquid in the receiving space.

## Patentansprüche

1. Zerkleinerungsvorrichtung (1), die konfiguriert ist, um Haushalts-, medizinische und/oder Industrieabfälle, die flüssige und/oder feste Materialien enthalten, zu zerkleinern und an den Abwasserkanal abzugeben, wobei die festen Materialien Kunststoffteile und/oder Metallteile zum Zerkleinern aufweisen, wobei die Zerkleinerungsvorrichtung aufweist:
- einen Einlass (7) zum Einbringen der Abfälle, die zerkleinert und abgegeben werden sollen;
- eine Zerkleinerungseinheit (20), die ausgeführt ist, um über den Einlass eingebrachte Abfälle zu zerkleinern;
- einen Aufnahmeraum (45), der ausgeführt ist, um die zerkleinerten Abfälle aus flüssigem und festem Material aufzunehmen;
- eine Transportflüssigkeitszuführung, die ausgeführt ist, um Transportflüssigkeit an den Aufnahmeraum zuzuführen;
- einen Auslass (62), der mit dem Aufnahmeraum und dem Abwasserkanal verbindbar ist; wobei der Auslass konfiguriert ist, um die Mischung aus den Abfällen aus zerkleinertem flüssigen und festen Material ebenso wie die Transportflüssigkeit aus dem Aufnahmeraum an den Abwasserkanal abzugeben; und so dass der Auslass eine einstellbare Schießvorrichtung zum Einstellen des Durchsatzes der Mischung aus dem Aufnahmeraum zu dem Abwasserkanal aufweist, **dadurch gekennzeichnet, dass** die einstellbare Schließvorrichtung (70) aufweist:
- ein Schließvorrichtungsgehäuse (74), das mit einem Eingang und einem Ausgang versehen ist;
- ein flexibles Element (75), insbesondere eine flexible Membran, die in dem Schließvorrichtungsgehäuse eingerichtet ist und mit dem Eingang und dem Ausgang verbunden ist, wobei das flexible Element ausgeführt ist, um einen einstellbaren Durchgang zwischen dem Eingang und dem Ausgang auszubilden;
- eine Steuereinheit (40) zum Verschieben des flexiblen Elements zwischen einer Schließposition, in der die Membran den Durchgang zwischen dem Eingang und dem Ausgang schließt, und einer geöffneten Position, in der das flexible Element einen Durchgang zwischen dem Eingang und dem Ausgang frei lässt.

2. Zerkleinerungsvorrichtung nach Anspruch 1, wobei der Boden des Aufnahmeraums sich zu dem Zweck, die flüssigen und festen Materialien in der geöffneten Position der Schließvorrichtung in der Richtung des Auslasses zu verlagern, in einer Neigung erstreckt.

3. Zerkleinerungsvorrichtung nach Anspruch 1 oder 2, wobei die Steuereinheit aufweist:
- eine Druckmediumeinheit, die konfiguriert ist, um ein Druckmedium an den Zwischenraum zwischen dem flexiblen Element und dem Schließvorrichtungsgehäuse zuzuführen, um die Schließvorrichtung zu schließen und Druckmedium aus dem Zwischenraum abzugeben, um die Schließvorrichtung zu öffnen.

4. Zerkleinerungsvorrichtung nach Anspruch 1, 2 oder 3, wobei das flexible Element der einstellbaren Schließvorrichtung eine Gummihülse, die mit dem Eingang oder Ausgang verbunden ist, aufweist und/oder wobei die einstellbare Schließvorrichtung ein Quetschventil ist.

5. Zerkleinerungsvorrichtung nach einem der vorhergehenden Ansprüche, wobei das flexible Element eine längliche Form hat, um einen länglichen Durchgang zu definieren, wobei die Länge des flexiblen Elements und des dadurch realisierten Durchgangs größer als die größte Abmessung eines zerkleinerten Abfallteils ist, und/oder wobei der Durchgang größer als 5 cm, vorzugsweise größer als 10 cm, ist.

6. Zerkleinerungsvorrichtung nach einem der vorhergehenden Ansprüche, wobei die Transportflüssigkeitszuführung und der Aufnahmeraum ausgeführt und eingerichtet sind, um die zugeführte Transportflüssigkeit in dem Aufnahmeraum in eine Wirbelbewegung zu versetzen und in dieser zu halten, wobei der Boden des Aufnahmeraums vorzugsweise eine gekrümmte Form annimmt, um das Wirbeln in der Transportflüssigkeit zu fördern.

7. Zerkleinerungsvorrichtung nach einem der vorhergehenden Ansprüche, wobei die Transportflüssigkeitszuführung eine oder mehrere Sprühdüsen zum Ausbilden eines oder mehrerer Flüssigkeitsstrahle in der Richtung des Bodens des Aufnahmeraums aufweist, und/oder wobei der Transportflüssigkeitsstrahl eine Sprühdüse aufweist, die ausgeführt und eingerichtet ist, um Transportflüssigkeit in einer im Wesentlichen horizontalen Richtung in den Aufnahmeraum einzuleiten und/oder die Transportflüssigkeit und darin suspendierte Abfälle in die Richtung des Auslasses zu drängen.

8. Zerkleinerungsvorrichtung nach einem der vorhergehenden Ansprüche,
wobei die Zerkleinerungsvorrichtung aufweist: ein Zerkleinerungselement (21), das über einen Antriebsmotor drehbar angetrieben wird und eine mit Vorsprüngen versehene Außenoberfläche hat, und ein Schwingelement (36), das konfiguriert ist, um einen Teil der Abfälle während des Zerkleinerns gegen die Außenoberfläche des Zerkleinerungselements zu drücken, wobei das Schwingelement zum Schwingen zwischen einer ersten Druckposition zum Drücken eines Teils der Abfälle gegen die Außenoberfläche des Zerkleinerungselements und einer zweiten Druckposition zum Drücken eines anderen Teils der Abfälle gegen die Außenoberfläche des Zerkleinerungselements ausgeführt ist.

9. Zerkleinerungsvorrichtung nach Anspruch 8, wobei das Schwingelement sich in der ersten Druckbetriebsart an einer ersten Position relativ zu dem Zerkleinerungselement erstreckt und sich in der zweiten Druckbetriebsart an einer zweiten Position relativ zu dem Zerkleinerungselement erstreckt.

10. Zerkleinerungsvorrichtung nach Anspruch 8 oder 9, die ein ortsfestes Anschlagelement, das an dem Gehäuse angebracht ist, aufweist, um das Schwingelement in der ersten und zweiten Druckposition in einem vorgegebenen Abstand von der Außenoberfläche des Zerkleinerungselements zu halten.

11. Zerkleinerungsvorrichtung nach einem der vorhergehenden Ansprüche, die eine Steuereinheit aufweist, die konfiguriert ist, um das Zerkleinerungselement und/oder die Transportflüssigkeitszuführung und/oder die einstellbare Schließvorrichtung zu steuern, wobei die Steuereinheit vorzugsweise ausgeführt ist, um die Abfälle intermittierend zu dem Auslass zu transportieren.

12. System zum Zerkleinern und Transportieren von Abfällen in einem Gebäude, insbesondere einer Gesundheitseinrichtung, einem Flugzeug- oder Flughafen-Terminal, wobei das System aufweist:
- eine oder mehrere Zerkleinerungsvorrichtungen (1) zum Zerkleinern und Transportieren von Abfällen nach einem der vorhergehenden Ansprüche, die an verschiedenen Orten in dem Gebäude angeordnet sind;
- ein Rohrleitungssystem, das mit dem/den jeweiligen Auslass/Auslässen der einen oder mehreren Zerkleinerungsvorrichtungen verbunden ist, wobei das Rohrleitungssystem mit dem Abwasserkanal verbunden ist,
wobei das System ferner aufweist:
- eine oder mehrere Trennvorrichtungen, die in dem Rohrleitungssystem eingerichtet sind und konfiguriert sind, um die zerkleinerte und abgegebene Mischung aus Flüssigkeit und Abfällen wenigstens in einen ersten und zweiten Abfallteil zu trennen und nur den ersten Abfallteil zu dem Abwasserkanal zu befördern; und/oder
- eine oder mehrere Reinigungsvorrichtungen, die in dem Rohrleitungssystem eingerichtet sind und konfiguriert sind, um wenigstens einen Teil der zerkleinerten und abgegebenen Abfälle zu reinigen; und/oder
- einen oder mehrere Fermenter, die in dem Rohrleitungssystem eingerichtet sind und konfiguriert sind, um wenigstens einen Teil der zerkleinerten und abgegebenen Abfälle zu fermentieren.

13. Verfahren zum Zerkleinern von Haushalts-, medizinischen und/oder Industrieabfällen, die verschiedene flüssige und/oder feste Materialien enthalten, und zum Abgeben dieser an den Abwasserkanal, wobei die festen Materialien Kunststoffteile und/oder Metallteile, die zerkleinert werden sollen, aufweisen, wobei das Verfahren aufweist:
- Einbringen eine Menge von Abfällen zum Zerkleinern in eine Zerkleinerungsvorrichtung nach einem der Ansprüche 1 - 12;
- Zerkleinern der eingebrachten Abfälle mit der Zerkleinerungseinheit;
- Befördern der zerkleinerten Abfälle zu einem Aufnahmeraum;
- Zuführen von Transportflüssigkeit an den Aufnahmeraum;
- Öffnen des Durchgangs in der einstellbaren Schließvorrichtung;
- Abgeben der Mischung aus zerkleinertem Abfall und Transportflüssigkeit an den Abwasserkanal durch Öffnen des Durchgangs;
- Schließen des Durchgangs in der einstellbaren Schließvorrichtung,
und bevorzugt aufweist: Zuführen von Druckmedium an den Zwischenraum zwischen dem flexiblen Element und dem Schließvorrichtungsgehäuse zu dem Zweck, die Schließvorrichtung zu schließen und Abgeben von Druckmedium aus dem Zwischenraum zu dem Zweck, die Schließvorrichtung zu öffnen.

14. Verfahren nach Anspruch 13, welches das intermittierende Öffnen und Schließen des Durchgangs zu dem Zweck, zur Zeit der Mischung von Transportflüssigkeit und zerkleinerten Abfällen wenigstens ein minimales Volumen zu transportieren.

15. Verfahren nach einem der Ansprüche 13 - 14, welches das Erzeugen von Wirbeln der Mischung aus Abfällen und Transportflüssigkeit in dem Aufnahmeraum aufweist.

## Revendications

1. Dispositif de broyage (1) qui est configuré pour broyer et évacuer à l'égout des déchets domestiques, médicaux et/ou industriels comprenant des matières liquides et/ou solides, dans lequel les matières solides comprennent des parties plastiques et/ou des parties métalliques à broyer, le dispositif de broyage comprenant :
- une admission (7) pour insérer les déchets à broyer et à évacuer ;
- une unité de broyage (20) destinée à broyer les déchets insérés par l'intermédiaire de l'admission ;
- un espace de réception (45) destiné à recevoir les déchets broyés de matières liquides et solides ;
- une alimentation en liquide de transport destinée à alimenter l'espace de réception en liquide de transport ;
- une sortie (62) pouvant être raccordée à l'espace de réception et à l'égout ;
dans lequel la sortie est configurée pour évacuer le mélange des déchets broyés de matières liquides et solides ainsi que le liquide de transport de l'espace de réception à l'égout ; et la sortie comprend un dispositif de fermeture ajustable pour ajuster le débit dudit mélange de l'espace de réception à l'égout, **caractérisé en ce que** le dispositif de fermeture ajustable (70) comprend :
- un boîtier de dispositif de fermeture (74) pourvu d'un orifice d'entrée et d'un orifice de sortie ;
- un élément souple (75), en particulier une membrane souple, agencé dans le boîtier de dispositif de fermeture et raccordé à l'orifice d'entrée et à l'orifice de sortie, dans lequel l'élément souple est destiné à former un passage ajustable entre l'orifice d'entrée et l'orifice de sortie ;
- une unité d'organe de commande (40) permettant de déplacer l'élément souple entre une position de fermeture à laquelle la membrane ferme le passage entre l'orifice d'entrée et l'orifice de sortie, et une position d'ouverture à laquelle l'élément souple laisse un passage libre entre l'orifice d'entrée et l'orifice de sortie.

2. Dispositif de broyage selon la revendication 1, dans lequel le fond de l'espace de réception s'étend à une inclinaison dans le but de déplacer les matières liquides et solides dans la direction de la sortie à la position ouverte du dispositif de fermeture.

3. Dispositif de broyage selon la revendication 1 ou 2, dans lequel l'unité d'organe de commande comprend :
- une unité de milieu de pression configurée pour fournir un milieu de pression à l'espace intermédiaire entre l'élément souple et le boîtier de dispositif de fermeture afin de fermer le dispositif de fermeture et pour évacuer le milieu de pression dudit espace intermédiaire afin d'ouvrir le dispositif de fermeture.

4. Dispositif de broyage selon la revendication 1, 2 ou 3, dans lequel l'élément souple du dispositif de fermeture ajustable comprend une gaine en caoutchouc raccordée à l'orifice d'entrée et à l'orifice de sortie et/ou dans lequel le dispositif de fermeture ajustable est une vanne à écrasement.

5. Dispositif de broyage selon l'une quelconque des revendications précédentes, dans lequel l'élément souple a une forme allongée pour définir un passage allongé, dans lequel la longueur de l'élément souple et du passage réalisé de ce fait est supérieure à la plus grande dimension d'un morceau de déchets broyés et/ou dans lequel la longueur du passage est supérieure à 5 cm, de préférence supérieure à 10 cm.

6. Dispositif de broyage selon l'une quelconque des revendications précédentes, dans lequel l'alimentation en liquide de transport et l'espace de réception sont destinés à et agencés pour mettre et maintenir le liquide de transport fourni dans un mouvement de tourbillonnement dans l'espace de réception, dans lequel le fond de l'espace de réception prend de préférence une forme incurvée afin d'améliorer le tourbillonnement du liquide de transport.

7. Dispositif de broyage selon l'une quelconque des revendications précédentes, dans lequel l'alimentation en liquide de transport comprend une ou plusieurs buses de pulvérisation pour former un ou plusieurs jets de liquide dans la direction du fond de l'espace de réception, et/ou dans lequel l'alimentation en liquide de transport comprend une buse de pulvérisation qui est destinée à et agencée pour introduire le liquide transport dans une direction sensiblement horizontal dans l'espace de réception et/ou pour pousser le liquide de transport et les déchets en suspension dans celui-ci dans la direction de la sortie.

8. Dispositif de broyage selon l'une quelconque des revendications précédentes,
dans lequel le dispositif de broyage comprend un élément de broyage (21) entraîné de manière à pouvoir tourner par l'intermédiaire d'un moteur d'entraînement et ayant une surface extérieure pourvue de saillies, et un élément basculant (36) configuré pour presser une partie des déchets contre la surface extérieure de l'élément de broyage au cours du broyage, dans lequel l'élément basculant est destiné à basculer entre une première position de pression permettant de presser une partie des déchets contre la surface extérieure de l'élément de broyage et une seconde position de pression permettant de presser une autre partie des déchets contre la surface extérieure de l'élément de broyage.

9. Dispositif de broyage selon la revendication 8, dans lequel l'élément basculant s'étend dans le premier mode de pression à une première position par rapport à l'élément de broyage, et s'étend dans le second mode de pression à une seconde position par rapport à l'élément de broyage.

10. Dispositif de broyage selon la revendication 8 ou 9, comprenant un organe de butée immobile attaché au boîtier pour maintenir l'élément basculant à une distance prédéterminée de la surface extérieure de l'élément de broyage aux première et seconde positions de pression.

11. Dispositif de broyage selon l'une quelconque des revendications précédentes, comprenant une unité de commande configurée pour commander au moins l'un de l'élément de broyage, l'alimentation en liquide transport et le dispositif de fermeture ajustable, dans lequel l'unité de commande est de préférence destinée à transporter par intermittence les déchets vers la sortie.

12. Système de broyage et de transport de déchets dans un bâtiment, en particulier un établissement de soins, un aéronef ou un terminal d'aéroport, le système comprenant :
- un ou plusieurs dispositifs de broyage (1) permettant de broyer et de transporter des déchets selon l'une quelconque des revendications précédentes, disposés à des emplacements différents dans le bâtiment ;
- un système de canalisation raccordé aux une ou plusieurs sorties respectives desdits un ou plusieurs dispositifs de broyage, dans lequel le système de canalisation est raccordé à l'égout ;
le système comprenant en outre :
- un ou plusieurs dispositifs de séparation agencés dans le système de canalisation et configurés pour séparer le mélange broyé et déchargé de liquide et de déchets en au moins des première et seconde parties de déchets et porter uniquement la première partie de déchets à l'égout ; et/ou
- un ou plusieurs dispositifs de purification agencés dans le système de canalisation et configurés pour purifier au moins une partie des déchets broyés et déchargés ; et/ou
- un ou plusieurs fermenteurs agencés dans le système de canalisation et configurés pour fermenter au moins une partie des déchets broyés et déchargés.

13. Procédé permettant de broyer et d'évacuer à l'égout des déchets domestiques, médicaux et/ou industriels comprenant différentes matières liquides et/ou solides, dans lequel les matières solides comprennent des parties plastiques et/ou des parties métalliques à broyer, le procédé comprenant :
- l'insertion d'une quantité de déchets à broyer dans un dispositif de broyage selon l'une quelconque des revendications 1 à 12 ;
- le broyage des déchets insérés avec l'unité de broyage ;
- le port des déchets broyés jusqu'à un espace de réception ;
- l'alimentation en liquide de transport à l'espace de réception ;
- l'ouverture du passage dans le dispositif de fermeture ajustable ;
- la décharge du mélange de déchets broyés et de liquide de transport à l'égout par l'ouverture du passage ;
- la fermeture du passage dans le dispositif de fermeture ajustable ;
comprenant de préférence la fourniture d'un milieu de pression à l'espace intermédiaire entre l'élément souple et le boîtier de dispositif de fermeture dans le but de fermer le dispositif de fermeture et la décharge du milieu de pression dudit espace intermédiaire dans le but d'ouvrir le dispositif de fermeture.

14. Procédé selon la revendication 13, comprenant l'ouverture et la fermeture par intermittence du passage dans le but de transporter au moins un volume minimal à la fois du mélange de liquide de transport et de déchets broyés.

15. Procédé selon la revendication 13 ou 14, comprenant la génération d'un tourbillonnement du mélange de déchets et de liquide de transport dans l'espace de réception.
